## Europäisches Patentamt
## European Patent Office
## Office européen des brevets

(19)

(11) Publication number: **0 096 419**
**B1**

(12) **EUROPEAN PATENT SPECIFICATION**

(45) Date of publication of patent specification: **16.10.85**

(51) Int. Cl.⁴: **H 04 L 11/20, H 04 L 11/16**

(21) Application number: **83105631.2**

(22) Date of filing: **08.06.83**

(54) Distributed variable-band switching system for speech and data.

(30) Priority: **09.06.82 IT 6773682**

(43) Date of publication of application:
**21.12.83 Bulletin 83/51**

(45) Publication of the grant of the patent:
**16.10.85 Bulletin 85/42**

(84) Designated Contracting States:
**BE CH DE FR GB LI NL SE**

(56) References cited:
EP-A-0 077 563
US-A-4 210 780

COMPCON 82, DIGEST OF PAPERS, 22nd-25th
February 1982, pages 121-127, IEEE Computer
Society Press, New York, USA F.A. TOBAGI:
"The EXPRESS-NET: A local aerea
communication network integrating voice and
data"
PROCEEDINGS OF THE FIFTH INTERNATIONAL
CONFERENCE ON COMPUTER
COMMUNICATION, Atlanta, 27th-30th October
1980, pages 281-286, Jack Salz, USA G.C.
O'LEARY: "Local access area facilities for
packet voice" Page 282, line 9 - page 283, line 23

(73) Proprietor: **CSELT Centro Studi e Laboratori
Telecomunicazioni S.p.A.**
**Via Guglielmo Reiss Romoli, 274**
**I-10148 Turin (IT)**

(72) Inventor: **Gabrielli, Luciano**
**Via Torino, 93/3**
**Leini (TO) (IT)**
Inventor: **Sposini, Maurizio**
**Via A. Moro, 8/4**
**Rovalta Torinese (TO) (IT)**

(74) Representative: **Riederer Freiherr von Paar zu
Schönau, Anton**
**Freyung 615 Postfach 2664**
**D-8300 Landshut (DE)**

(56) References cited:
NATIONAL TELECOMMUNICATIONS
CONFERENCE, CONFERENCE RECORD, vol. 2
of 4, Houston, 30th November - 4th December
1980, pages 41-1-1 - 41.1.5, New York, USA D.L.
GIOVACHINO: "A high speed packet switched
local network" Page 41.1.1, line 13 - page
41.1.2, line 10

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a distributed variable-band switching system for speech and data packets, comprising a folded unidirectional bus with a signal transmission or writing branch and a signal reception or reading branch to which a plurality of terminals are coupled via transmission couplers and reception couplers which are connected to access control devices for controlling the access to the bus so that, for speech packet transmission, the activity of the terminals is subdivided into frames the duration of each frame being at least equal to the time elapsing between the generation of two successive packets relating to the same speech communication, the frame comprising time slots each allotted to a speech communication and having a duration equal to that of transmission of a packet and being reserved to the communication during the whole duration thereof, a contention procedure being established in case of simultaneous access requests of some terminals.

Such switching system is deemed to be known from an older proposal published in EP—A—77 563 which forms part of the state of the art by virtue of Article 54(3) of the European Patent Convention. It serves for an integrated network to be used for both speech and data traffic. The system is designed for a local network, the access to the bus being exclusively controlled according to a contention access technique, i.e. according to a CSMA-CD protocol. If, however, an integrated service public network is to be equipped with a switching system, such public network having a bus length in the order of tenths of kilometers, the technique adopted for a local network cannot be straight forward used because it would entail a loss of efficiency.

Thus, the system of the prior proposal according to EP—A—77 563 would show such drawbacks if applied to a public network.

According to a prior art system known from US—A—4 210 270, voice and data are handled in the same manner, and the access to the bus occurs according to a contention technique with collision detection, and concerns individual terminals. To detect collisions, the information present on the reading branch of the bus is used. Thus, as explained, the system lacks efficiency due to the contention access if applied to a large public network, which lack of efficiency is even enhanced by the fact that the collisions are detected in the reading branch and hence can be solved only after a time equal to propagation delay which in case of large networks may be very high.

As for local computer networks based on packet-switching and on information broadcast techniques, also for integrated services networks the use of a single communication link which connects all the networks nodes or stations has been proposed.

In networks of this kind the connection structure itself in conjunction with intelligent units distributed in all the stations, implements a distributed switching system. This trend is suggested by the simple architecture which makes it possible to integrate transmission and switching.

It is clear that, when applying solutions studied for local computer networks to integrated services public networks, problems are encountered due to the different distribution of traffic sources, which sets technological bounds to the communication medium, and to the different type of traffic; in fact local computer networks generally connect individual terminals, distributed over a limited area, and the traffic is of the intermittent type typical of data transmission; on the contrary, in the case of integrated services public networks there are "islands" with high terminal concentration in correspondence with buildings, which islands are scattered over a wide area, and there is a continuous traffic background, represented by phone calls, to which instantaneous peaks due to data communications are superimposed. To solve these problems not only a particular network structure is required, but also access devices are to be implemented which make it possible to share as efficiently as possible the network capacity among the several stations.

As to the structure of the interconnection network, considering for simplicity of description and by way of example the use of the optical fibre which offers the wide band required by an integrated services network, networks using mostly passive components are particularly interesting for technological reasons.

Two solutions of this kind are known and use either a folded unidirectional bus, to a branch of which all the writing (signal insertion) points are connected, while all the reading (signal extraction) points are connected to the other branch, or a star configuration.

The solution with unidirectional bus cannot be used in the public network where a lot (even some hundreds) of signal insertion and extraction points can be present. In fact the optical devices which implement such points introduce considerable power losses and would entail the introduction of closely spaced regenerators: consequently the goal represented by a mostly passive system is no longer achieved.

The star configuration makes it possible to interconnect a higher number of terminals. Yet also the use of this configuration is hindered by two factors. The first is technological, as nowadays big-sized star-couplers are not feasible (in particular, it is possible to implement only star-couplers capable of connecting some tens of terminals at the most, instead of some hundreds of terminals).

The second factor concerns the distribution of the terminals: in fact a star configuration is convenient when all the points to be connected are at about the same distance from the connection point while, as mentioned, in public networks there are "islands" irregularly distributed along the network.

As to the access to the system (which, as mentioned, comprises a single physical link) it is desirable that each terminal may establish also several simultaneous connections with several terminals.

For that reason it is necessary to share the channel capacity among the various terminals, according to the particular and even instantaneous requirements of each one.

This may be obtained by devices implementing a suitable access procedure (or protocol) dynamically allotting each terminal the band it requires. Reliability and modularity reasons make it advisable to avoid solutions requiring centralized devices managing the channel resources; as a consequence, an asynchronous (or distributed) access system is desirable.

By the term "access system" the whole of the protocol and of the devices implementing it are meant.

Asynchronous access systems are subdivided into two classes: random—access systems and ordered—access systems.

Among the former, a sufficient band-exploitation efficiency is afforded by the CSMA-CD (Carrier Sense Multiple Access with Collision Detection) protocol, which can be implemented with relatively simple devices. However, the system efficiency, which is optimal when the ratio $T_r/T_p$ between round trip delay $T_r$ and time $T_p$ of transmission of a packet at the line rate is $\ll 1$ (i.e. when the terminals are quite close), decreases as such a ratio increases and becomes insufficient when such a ratio is $\geq 1$. This just happens in case of a rather wide network implemented with a wide-band transmission medium, like that into which the invention is to be inserted: hence CSMA-CD system is not suitable.

Among the ordered-access systems the so-called "Round Robin" system is of particular interest to the applications concerned by the invention. According to that system, a number of "rounds" are established and in every "round" the stations having packets to be transmitted are allowed to intervene at least and only once: for instance the station more distant from the bus folding point (most upstream station) can intervene first and the other ones can follow, up to the most downstream station.

Once the most downstream station has completed transmission, a new round can begin. This system presents high efficiency and is not dramatically dependent on the network size and hence on the propagation time. Moreover it makes the delay of transmission of a packet (sum of the bus access time, of the transmission time and of the propagation time) not to exceed a maximum predetermined value.

However, the efficiency of the system is strictly dependent on the ordered terminal arrangement: since the terminals are generally at a distance from the bus, side branches even of different length will be present, whereby the attainment of the sequential arrangement is obtainable to the detriment of the system performance. In case of computer networks, which present isolated terminals, the problem may be solved if the terminal activity is preceded by a suitable preamble, whose length depends on the length of the branch; that solution however is detrimental to the efficiency. In case of the public network owing to the presence of "islands" of terminals connected to a same bus point, a logical order of the terminals within an "island" ought to be achieved by booking procedures: yet, the presence of branches with a length even of the order of one hundred meters, would make the total booking time exceed the actual information interchange time.

This would limit the system efficiency to such an extent as to make its application no longer interesting. Both CSMA-CD and "Round Robin" systems have been devised for data transmission or, generally, for transmission of information which does not require synchronous characteristics to be maintained. In the case in which the network is used also for communications with synchronous characteristics, such as speech communications, the access system has to allow the maintenance of such characteristics, otherwise the transmission quality would be degraded in an unacceptable way for a public network.

Thereagainst, the problem to be solved by the invention is to provide a distributed variable-band switching system for speech and data suited to a topology with islands with high terminal concentration, which system makes it possible to maintain the synchronous characteristics of the voice and to have for the data the advantages of both the linear bus and the star-structures and of both the random-access and the ordered-access systems.

This problem is solved by the invention which, starting out from the initially defined system, is such that, for being suitable for an integrated service public network in which a plurality of nodes are distributed along the bus and are each associated with a plurality of the terminals, to obtain an ordered arrangement of all the terminals, each node comprises: one of the transmission couplers and one of the reception couplers, connected to the writing branch and reading branch of the bus, respectively, and common to all the terminals of the node, a detector of the activity of the terminals belonging to upstream nodes, said detector being connected to the writing branch of the bus upstream the transmission coupler, a detector of the busy state of the terminals of the node itself or of the activity of upstream nodes, and a collision detector for sharing the activity among the terminals of the node itself, these two last mentioned detectors being connected to the writing branch of the bus downstream the transmission coupler; and that said detectors of activity and busy state or collision are connected to the access control devices of all the terminals of the node, each of which devices, depending on the information extracted from the packet flow of the reading branch of the bus and on the signals emitted by the detectors, organizes data packet transmission in rounds during which the access to the bus is assured at least once to all the terminals presenting packets ready for transmission, for a time sufficient for the transmission, the transmission priority being allotted to the most upstream node in case of simultaneous requests by terminals belonging to different nodes, whilst the contention procedure is established in case of simultaneous requests by terminals belonging to the same node, and the formation of the first frame in each terminal begins at the instant at which the first presence of a booking, i.e. of the first speech communication, is detected at said terminal, while the building-up of subsequent frames begins at the instant at which a signal is detected coming from the terminal to which the first active channel refers.

Thus, the invention uses for the data an access technique which is a combination of an ordered access technique (as far as the different nodes are concerned) and a contention access technique (as far as the different terminals of a node are concerned) while maintaining a frame organization for the voice. This combined technique allows a very high efficiency. In particular the system establishes an ordered sequence of the islands (as along the linear bus) so that the bus capacity may be shared among the various islands according to an ordered access procedure; the activity of the terminals inside an island can be controlled by a random-access protocol, as if the island were a star. In other words, the collision only concerns the access within a node and not along the whole bus, and are moreover solved by extracting the information from the writing branch, within the node itself, so that the delay is limited to the transmission of the information along the individual lines or the secondary bus connecting the terminals with the couplers. The nodes comprise, beside the couplers, further logic circuitry for scheduling the access of the various terminals.

For a better understanding, reference is made to the annexed drawings in which:

Fig. 1 is a block diagram of a network organized according to the invention;

Fig. 2 is a block diagram of a device managing the access to the bus;

Fig. 3 is a block diagram of the control device of the speech packet memory;

Fig. 4—7 are flow charts depicting the operation of a number of logic networks of the device of Fig. 2.

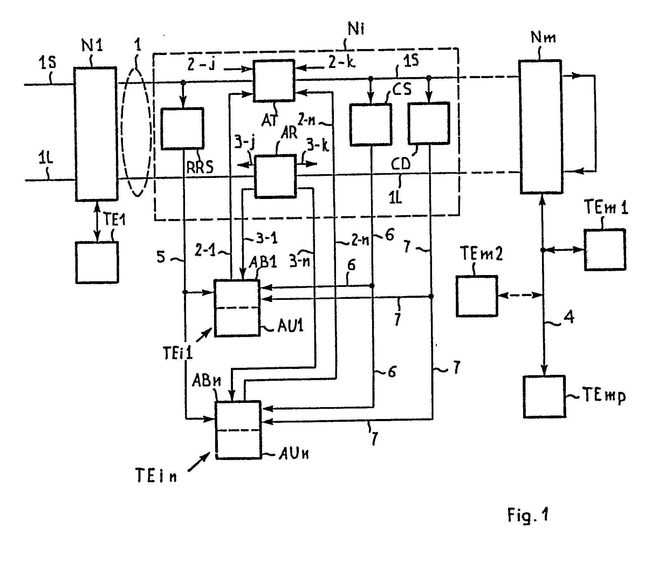

In Fig. 1 the system collecting packetized speech and data comprises a wide-band unidirectional bus 1, which by way of example is assumed to be implemented with an optical fibre, folded at one end so as to from a writing branch 1S and a reading branch 1L.

The "islands" of terminals are distributed along bus 1, and are connected therewith by nodes N1...Ni...Nm.

Block TE1 schematizes the whole of the terminals associated with node N1; references TEi1...TEin and TEm1, TEm2...TEmp denote the terminals associated with nodes N1 and Nm, respectively.

The access to the bus by the terminals is managed by respective logic networks AB1...ABn, which are part of the terminals themselves, with a procedure which will be disclosed later. Logic networks AB are shown only for terminals associated with node Ni. The remaining part of the terminals, denoted by AU1...AUn, comprises the actual subscriber sets for speech and data transmission and the other equipment necessary to manage the communications.

As shown in detail for node Ni, for all the terminals of a node, signals are fed to writing branch 1S (transmission) and extracted from the reading branch 1L (reception) at only two bus points, one for the transmission and the other for the reception, through directional couplers AT, AR. A physical distribution of this kind makes information broadcast possible, i.e. allows information transmitted by a terminal to be received by all the others.

The coupler structure depends on the physical nature of bus 1 and on how the terminals are organized. As an example, the terminals in node Ni are connected to AT through lines 2-1, 2-j, 2-k, 2-n, and to AR through lines 3-1, 3-j, 3-k, 3-n, and hence couplers AT, AR will be star-couplers in node Nm a secondary bus 4 connected to terminals TEm1, TEm2...TEmp has been considered, so that T-couplers will be required.

Of course, lines 2 (2-1...2-n), 3 (3-1...3-n), and 4 will have the same bandwidth characteristics as bus 1.

A device RRS, able to detect the activity of one or a plurality of nodes upstream Ni (i.e. nodes which are more distant from the folding point of the bus), is connected to writing branch 1S, upstream transmission coupler AT, a device CS able to detect the activity of the terminals of node Ni or of nodes upstream Ni and a device CD able to detect collision among terminals of Ni are connected to the writing branch 1S, still inside Ni but downstream AT.

The connections are implemented with suitable couplers which are not shown. Detectors RRS, CS, CD supply the information to logic networks AB1...ABn of all the terminals of the node through lines 5, 6, 7.

Devices RRS and CS, which advantageously have the same circuit structure, may be implemented in various ways, depending on the transmission code and on the bus type. In particular, they can operate by detecting the transitions, thereby delivering signals indicating the beginning and end of carrier, or by integrating the mean activity.

Circuits having the same tasks as RRS and CS are well known in the art. Even for the structure of collision detector CD different solutions are possible, depending on the modalities of transmission on the bus. For instance CD can be a threshold system (based on the fact that the power transmitted on a bus by a terminal is known and each increase denotes collision) or it can detect the absence of the synchronism information in the received data string. The latter systems are based on the fact that in certain kinds of code individual pulses present rigid phase correlations which are missing when a plurality of signals overlap.

With the node structure described, a given terminal can sense the activity on bus 1 both upstream and downstream coupler AT of its node, and can detect the collisions with other terminals connected to the same node. Moreover, bus 1 being unidirectional, a given terminal can sense the activity of the upstream terminals both on the writing branch (through RRS and CS) and on the reading branch (through AR and line 3) and can sense the activity of the downstream terminals only on the reading branch. This asymmetry allows for a "Round Robin" arrangement of the nodes or islands. Inside each island the access to the channel is managed according to a CSMA-CD protocol. Here "Round" denotes the time interval during which the bus control is allotted at least once (for a time sufficient to the transmission) to all the terminals which have packets ready to be transmitted, independently of the packet generation instant with respect to the terminal which is transmitting.

Hence the duration of each "round" varies as a function of the number of terminals which are to transmit. Depending on the characteristics of the service to be offered (in particular depending on the transmission delay requirements) in each round an upperbound will be set to the number of accesses possible for a terminal, and that bound can be different for the different terminals and be varied during operation.

In the event of "simultaneous" access attempts by terminals belonging to different nodes the priority will be given to the transmission originated in the most upstream node. The term "simultaneous" indicates the simultaneous presence of the signals from the two terminals in the common bus trunks. The access is attempted if the line is idle, which is indicated by CS.

The transmission initiated by a terminal is completed unless RRS or CD emit signals. If RRS emits a signal before CD, the activity is generated by an upstream terminal and the transmission initiated is stopped and resumed as soon as the line becomes idle again. Since a transmission cannot be stopped instantaneously and it is desirable that the information coming from the upstream terminal is not damaged, a preamble will be transmitted in each period of a terminal activity, which preamble has no information content and has such a duration that the activity overlap affects only the preamble.

Signals emitted by CD, in the absence of signals coming from RRS, indicate the "simultaneous" activity of another terminal belonging to the same node, and the transmission will be rescheduled according to the CSMA-CD protocol chosen.

Clearly, a contention access with the described procedure is possible only for data communications, which are characterized by sequences of packets with random occurrence instants; in case the network is used also for speech communications (or in general for communications which demand synchronous characteristics to be maintained), in said communications only the instant of occurrence of the booking packet is random, whereas the subsequent packets occur at regularly spaced instants.

Consequently, logic AB in each terminal is to manage data communications and the setting up of a speech communication (i.e. the booking packet) according to a random-access protocol and to establish synchronous communication channels for speech communications. Said synchronous channels are to be established without resorting to a centralized synchronization of all the terminals, which would be a reliability node. For instance, at each station, under the exclusive control of a local timing system and starting from the instant the booking of the first speech communication is detected, the station activity is subdivided into frames whose minimum duration is equal to the time elapsing between the generation of two consecutive packets relating to the speech communication and, during each frame, the speech communications are allotted time slots equal to the duration of transmission of a packet, which time slots are reserved to said communications for their whole duration.

An upper limit can be set to the number of time slots allotted to speech communications, so as to leave always space to data communications; said time slots will be grouped together, consequently a frame will be subdivided into a "speech period" and "data period". Besides the packets relating to speech communications in progress, the "speech period" will comprise the booking packets of new calls, which can then collide only with other booking packets. The "data period" will contain packets relating to the communications which do not demand the maintenance of synchronous characteristics (data communications) as well the packet booking the first speech communication. The "rounds" described above concern only the data period and can extend over several frames.

The relative duration of the two periods may vary as a function of traffic and, in absence of speech communications, the whole channel capacity could be allotted to data communications. Moreover, also the frame beginning instant can vary, in that it can be established each time by the terminal the first active channel is associated with.

To achieve a correct communication management, each terminal builds up a map of the line occupation by the speech communications, said map having a duration equal to that of a frame and being updated at each frame. The map will store the busy or idle state of each synchronous channel, the beginning of the speech period and the number of active channels. The map built up with the information extracted during a frame from the reading branch 1L will be used in the subsequent frame for packet transmission on writing branch 1S.

As mentioned, the duration of the speech period can vary at each frame depending on traffic conditions. This variation is to be controlled so as to allow for the best exploitation of the available band. This causes no problem when the traffic increases, as it is easy to allot each new booking a channel adjacent to or at least close to the last busy channel; traffic reduction on the contrary occurs in random way so that in the extreme case only two channels (for the two directions of the same conversation), quite distant from each other, might remain busy.

If one wishes to maintain the frame subdivision into a single speech period and a single data period the most advantageous solution consists in defining the speech period by the two extreme active channels and, when an increase is required due to the arrival of new booking requests, in acting so that possible gaps are eliminated first and only subsequently the speech period is actually extended; when that extension is required, the speech period ought to be allotted a further channel, following the last active channel and reserved to bookings; this can be done only when the maximum number of active speech channels has not yet been reached.

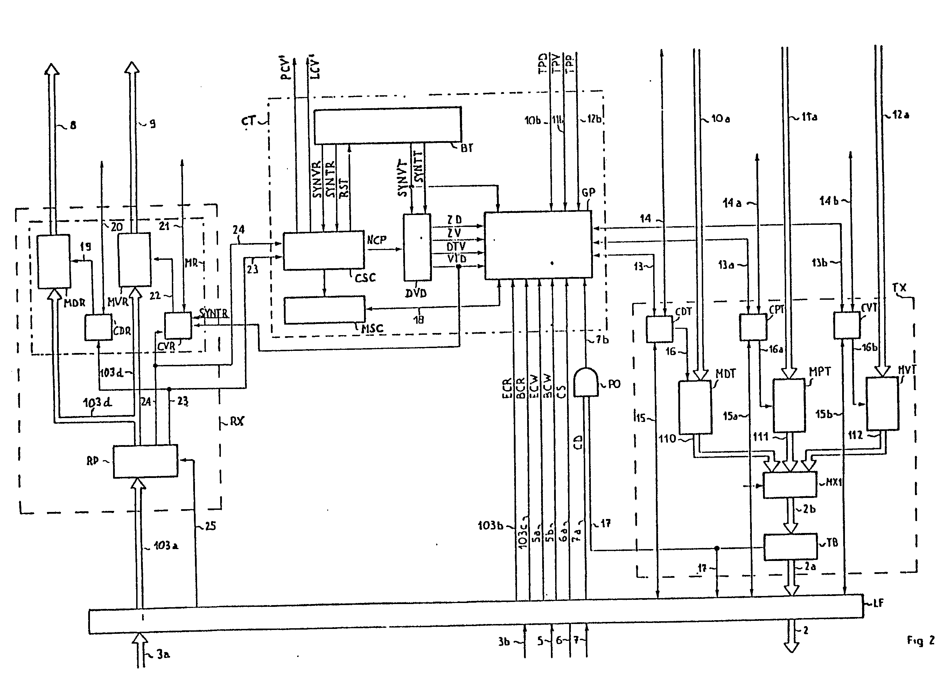

With reference to Fig. 2, logic network AB of a terminal of node Ni comprises a part RX for information reception, a transmission part TX and a control and timing part CT.

The reception part RX basically comprises a circuit RP for recognizing the type of packet present on the bus, recognizing and extracting from the bus the packets addressed to the terminal RX belongs to, and organizing in parallel form the bits of these packets, and memory means MR for the temporary storage of the received packets. Said packets arrive at AB through wire 3a of connection 3, the devices LF interfacing AB with the bus (devices managing the physical level of the protocol) and wire 103a. RP receives suitable control signals from LF (connection 25) and emits (on connections 23, 24) enabling signals for the memory means and signals relating to speech communications (in particular signals PV=incoming speech packet, PCV=booking of a speech channel, LVC=release of a speech channel, IZV=beginning of the speech period).

Such a circuit RP, comprises:

— a shift register which loads bit-by-bit, under the control of a control circuit, the words composing a packet present on the bus, and which has a capacity allowing it to store, besides a word with information contents, the words which, in the packet header, code the length and the address of destination of the packet itself;
— a comparator which compares the address present in said header with the address of the station it belongs to, in order to recognize the packets addressed to that station and to enable the storage of the received packets into the memory means;
— a first parallel-in, parallel-out register, which memorizes and makes available to the control circuit the word coding the packet length, upon a command supplied by the control circuit when said shift register has loaded both said word and that encoding the address;
— a second parallel-in, parallel-out register, which receives from said first register and makes available to the second part of the interface said word encoding the packet length, upon a command supplied by said control circuit, when the packet has been correctly extracted from the bus;
— a third parallel-in, parallel-out register which acts as an input register for the memory means and is enabled by said control circuit to load all the words of a packet addressed to the station it is part of.

Since circuit RP is also to recognize the type of packet (coded in the header), the comparator will be replaced by a decoder which generates the signals above. Moreover, "the second part of the interface" is here replaced by devices belonging to AU (Fig. 1).

Preferably, memory means MR comprises two random access memories MDR, MVR for data packets and for speech-communications signalling (booking and release) and speech packets, respectively, and the respective controller CDR, CVR; in this case RP will emit two enabling signals for CDR and CVR, respectively.

Memory MDR is controlled by CDR so that both reading and writing are cyclical, and it receives the suitable commands from CDR through a connection 19. The data read are forwarded to the devices in AU through connection 8. In addition controller CDR exchanges signals with AU through connection 20.

Controller CDR comprises:

— means controlling the write and read operations and the sequential addressing during reading and writing in said memory;
— a first comparator which at each writing in the memory compares the address interested in such operation with the first address available for the reading, in order to recognize and signal to the second part of the interface the exhaustion of the storage capacity of the memory;
— a register which after the recognition of the writing in the memory of a valid packet, stores the first address available for the writing of the subsequent packet, the output of said register being connected to means generating the write addresses in order to resume the writing at said address after recognition of a non-valid packet or after the exhaustion of the memory capacity;
— storage means, connected to the output of said register, to store the address present at said output after recognition of the writing in the memory of a valid packet, the output of said storage means being connected to means generating the read addresses in order to resume the reading in the memory at the address present at said register output, whenever the incorrect transfer of a packet to the second part of the interface is detected;

— a second comparator which is connected to the output of said storage means and is enabled by said second part of the interface, after the reception of a packet, to compare the address present at the output of the storage means with that present at the output of the means generating the read addresses, and which, in case of discrepancy between the addresses, enables said address generating means to load the address present at the output of said storage means and signals the discrepancy to the second part of the interface.

Speech packet memory MVR preferably comprises two identical memory units which alternate in the reading/writing operations at every frame, upon command of a signal extracted from frame synchronism.

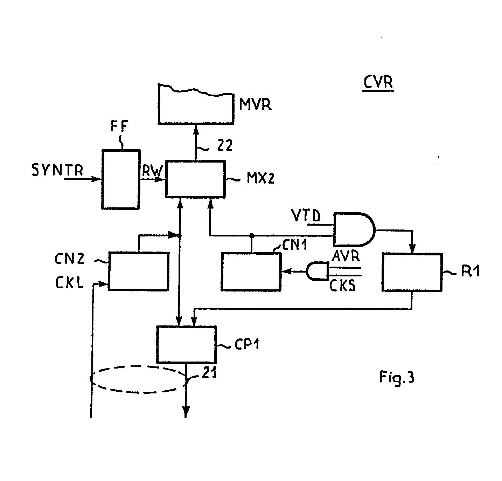

During reading, the content of memory MVR is forwarded to AU through connection 9. The commands are supplied by CVR through a connection 22; line 21 schematizes the connection between CVR and the remaining devices of AU. A possible implementation of CVR is represented in Fig. 3.

Transmission part TX comprises three memories with the respective controllers, namely a memory MDT for data packets to be transmitted, with controller CDT, a memory MPT for booking packets, with controller CPT, and a memory MVT for speech packets with controller CVT. The packets to be stored into the three memories are supplied by AU through connections 10a, 11a, 12a, as words with a suitable number of bits; packets read from the memories are presented on respective connections 110, 111, 112 and through a multiplexer MX1 are sent to a serializer TB which forwards them bit by bit to AT (Fig. 1) through wire 2a, LF and wire 2.

Multiplexer MX1 is controlled by a signal obtained from the enabling signals of CDT, CPT, CVT, so as to send TB the content of that memory whose controller is enabled at that instant.

Memories MDT, MPT for data and booking packets are cyclically read and written; speech packet memory MVT can be organized as MVR or, if desired, as MDT and MPT. In the latter case the same kind of controller can be used for the three memories.

Since packets of different kinds are to be inserted into suitable periods or into predetermined time slots of the output frames, the controllers will receive the necessary information and/or enabling signals from control part CT. References 13, 13a, 13b denote the connections between memory controllers and a logic network GP belonging to CT and managing the protocol, and references 14, 15, 16 (14a, 15a, 16a, 14b, 15b, 16b) denote the connections of the controllers with AU, LF and with their memories.

Controllers CDT, CPT (and possibly CVT) comprise:

— means for sequentially addressing the memory during reading and writing and for controlling the write and read operations;

— a first comparator, which compares at each write operation the address interested in such operation with the first address available for the reading, in order to recognize and signal to the second part of the interface the exhaustion of the storage capacity of the memory;

— a further random access memory which is written and read while the transmission memory is written and read, and which stores the addresses where the initial or the last word of a packet is stored in the transmission memory, in order to separate adjacent packets, the writing in the further memory being enabled by a signal emitted by the second part of the interface to separate two adjacent packets, and the reading being controlled by a signal indicating the read request for said transmission memory for the first word to be read or by a signal indicating that a packet has been completely read;

— means controlling the writing and reading and generating the sequential addresses for said further memory, the means generating the write addresses being apt to recognize and signal the exhaustion of the storage capacity of the memory to the second part of the interface;

— a second comparator which is connected to the output of said further memory and which, at each reading in the transmission memory, compares the address interested in said reading with that present at the output of said further memory to detect the end of the transmission of a packet, the output of said comparator being connected to the means controlling and addressing the further memory to generate the subsequent reading address, and to the transmission time base to start the counting of the time separating adjacent packets;

— a third comparator which is connected to the addressing means of said further memory and which, at each reading operation in said memory and upon enabling by the second comparator, compares the address involved in the operation with the first address available for the writing, to recognize that the transmission towards the bus of the contents of said transmission memory is over;

— a first register which has the input connected to the output of said further memory and the output connected to the means generating the read addresses for said transmission memory, and which stores the address present at the output of said further memory whenever the correct transfer of one or more packet to the bus is detected, said address being presented at the output of said means generating the read addresses for the transmission memory upon command of a signal which indicates that one or more packets have not been successfully forwarded over the bus because of a collision.

The control and timing part CT comprises, in addition to GP, a memory MSC of the bus state, with a controller CSC of the write operations, a logic DVD discriminating the speech and data periods, and a local time base BT.

Logic network GP carries out the operations described above, enabling transmission memory controllers at suitable instants.

To this aim GP receives: the commands for the transmission of data packets (TDP) speech packets (TPV), booking packets (TPP), said commands being sent by AU through wires 10b, 11b, 12b; the information coming from the bus and relating to the state of the bus itself, in particular: signal CS (delivered by the homonymous block of Fig. 1 through wire 6, LF and wire 6a), the information on the beginning and end of the carrier during the reading phase (signals BCR, ECR obtained by LF on the basis of the information delivered by AR, Fig. 1) and during the writing phase (signals BCW, ECW obtained by LF on the basis of signals delivered by RRS, Fig. 1) and the collision signal CD which is sent to GP through an AND gate P0 only in the presence of transmission activity (i.e. in presence of a signal delivered by TB on a wire 17), a speech-channel synchronism signal SYNVT, concerning the transmission, issued by time base BT; the signals coming from discriminator DVD and indicating the data and speech periods (ZD, ZV) as well as the transitions from one period to the other (DTV=data to speech transition; VTD=speech to data transition).

Discriminator DVD generates these signals on the basis of SYNVT, of a frame synchronism signal SYNTT relating to transmission, and of the information on the number of channels forming the speech period (NCP) delivered by controller CSC.

CSC, receiving the signal indicating the beginning of the speech period from RP, starts the synchronism signal generation in BT (signal RST); moreover, on the basis of the information delivered by RP and of frame and channel synchronism signals relative to reception (SYNTR, SYNVR) it writes the significant events relating to the speech period (i.e. booking and idle/busy state of each channel and beginning of the speech period) and the number of channels in the speech period, into memory MSC. This is done by CSC so that possible gaps are eliminated. Moreover CSC sends AU (Fig. 1) the signals PCV', LCV', indicating incoming channel booking and release.

Also memory MSC of the bus state will consist of two units, which at each frame alternate in the reading/writing operations. The information written in MSC during a frame upon command of CSC are read by GP in the subsequent frame. The connection between GP and MSC is represented by line 18.

Of course, since the information necessary to build up the speech communication map is extracted from the reading branch in a frame and is to be used by the writing branch in the subsequent frame, there is a delay which has to be taken into account while generating transmission synchronism signals. This is done in each terminal by a suitable initialization in which in particular the propagation time between transmission and reception couplers is determined.

The structure of GP, CSC, DVD will not be described in circuit details, but the state transition diagram or a flow chart of their operation will be given: the realization of logic networks operating according to said diagrams or charts presents no problem.

In Fig. 3, each unit of memory MVR receives the write and read addresses from counters CN1, CN2 through a multiplexer MX2, which at every two frames transfers to the output the signal emitted by CN1 or CN2. The multiplexer select is signal RW, which establishes the alternance between the two memory units. The signal is obtained by means of a flip-flop FF from frame synchronism SYNTR; the same signal, once inverted, controls the multiplexer associated with the other unit of MVR.

Counter CN1 is advanced by a clock signal CKS, supplied by RP, provided an enabling signal AVR delivered by RP is present. Counter CN2 is advanced by a suitable clock signal CKL delivered by AU (Fig. 1).

A register R1 (Fig. 3) stores the address present at the output of CN1 at the instant of transition from the speech to date period (signal VTD emitted by DVD), i.e. it stores the last address concerned by a write operation in a frame; said address is kept present at the input of a comparator CP1 which receives at a second input the read addresses generated by CN2. This comparator is to recognize the equality between the two addresses, which indicates the complete reading of what has been written in the memory in the preceding frame. Such event is signalled to AU (Fig. 1) in order to stop the reading.

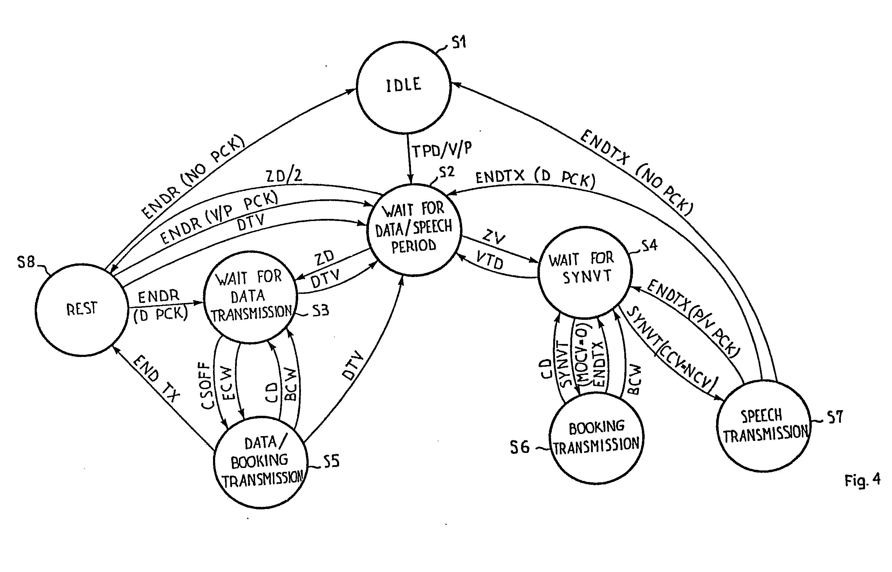

In Fig. 4 logic GP presents an initial idle state (S1) which it leaves at the arrival of a packet to transmit, signalled by the occurrence of one of signals TPD, PPV, TPP. From S1, GP passes to a state S2 where it waits for the signals coming from DVD (wait for speech/data period). Upon receiving signals which indicate data period, GP passes to a state S3 of "wait for data transmission" if the terminal has not yet successfully effected a transmission in the present round (ZD/1); otherwise it passes to the rest state S8 (ZD/2); upon the arrival of signal ZV, GP passes to a state S4 of wait for speech channel synchronism.

Considering first data transmission, GP leaves state S3 and passes to state S5 of actual transmission when the bus is idle, which is indicated by the arrival of signals CSOFF, ECW. This takes place also for the first booking packet of a speech channel, as under these conditions no synchronous frame exists yet.

From state S5, GP passes to rest state S8 at the transmission end (signal ENDTX), or resumes state S2 if during transmission signal DTV arrives, indicating the beginning of a speech period, or yet it resumes state S3 in case of collision with other terminals of the same node (signal CD) or of activity of an upstream terminal (signal BCW). GP leaves state S8 either at the arrival of signal DTV, which causes the recovery of state S2, or at the end of a round (ENDR).

The end of a round is recognized in that a predetermined minimum time has elapsed between signal ECR and the subsequent signal BCR. At the end of a round GP recovers idle state S1 in the absence of packets to be transmitted (NO PCK), or state S2 if speech or booking packets arrive and the frame already exists (V/P PCK) or yet state S3, if data packets or the first booking packet are to be transmitted (DPCK).

Considering speech or booking packet transmission when the frame already exists, at the arrival of signal SYNVT there is a transition from state S4 to state S6 of booking transmission if the corresponding channel is idle (MOCV=0), what means that the packet relating to this channel is a booking, or to state S7 of speech transmission, if the channel has already been allotted (CCV=NCV).

At the arrival of signal VTD, logic GP passes from state S4 to state S2. At the transmission end or in case of collision (CD) or of transmission from an upstream terminal (BCW), logic GP passes from state S6 to state S4. State S7 is left at the transmission end and states S1, S2 or S4 are resumed depending on whether no packets or data packets or booking or speech packets are to be transmitted.

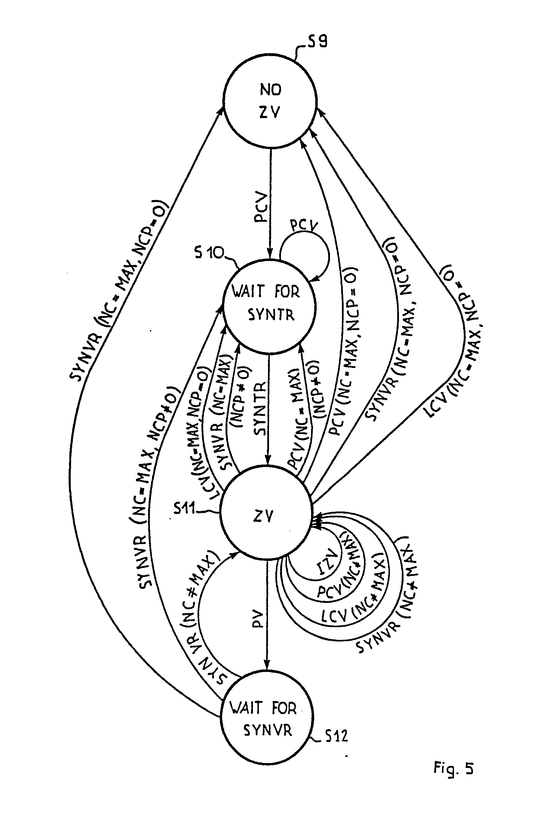

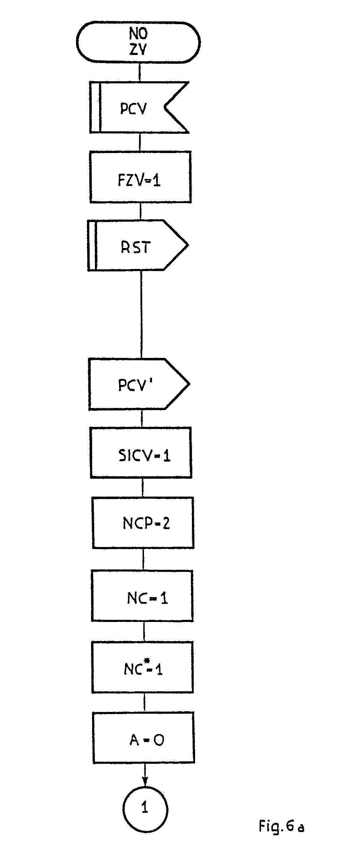

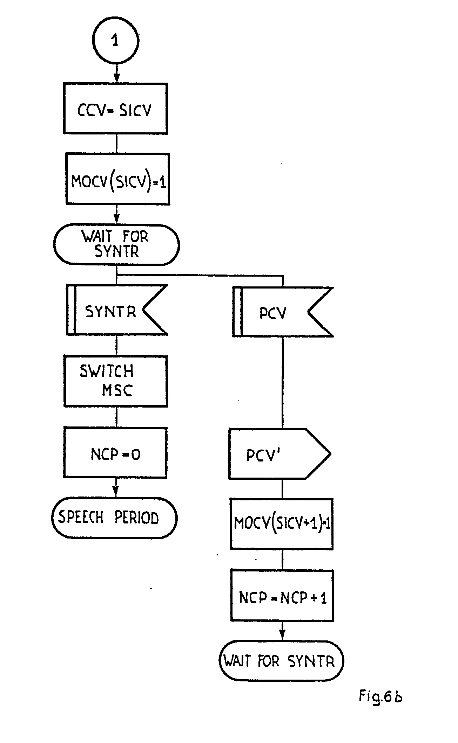

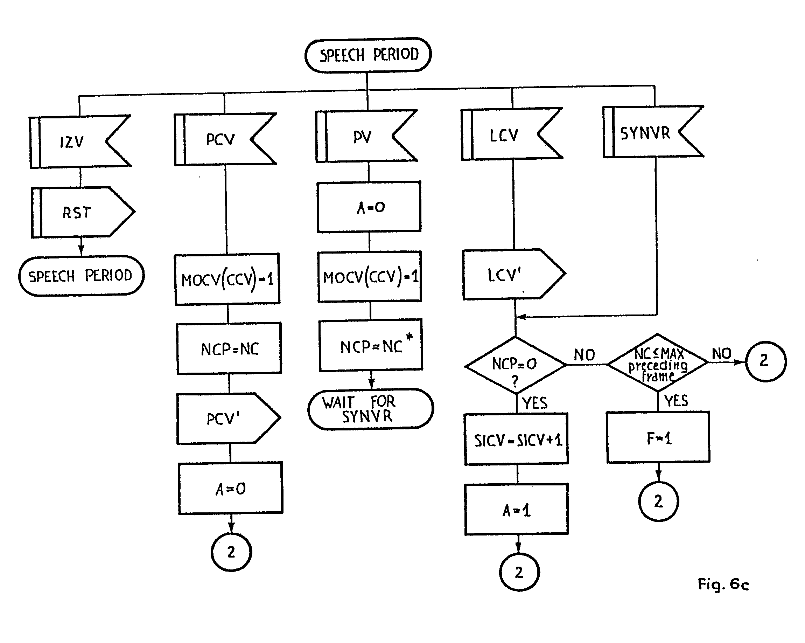

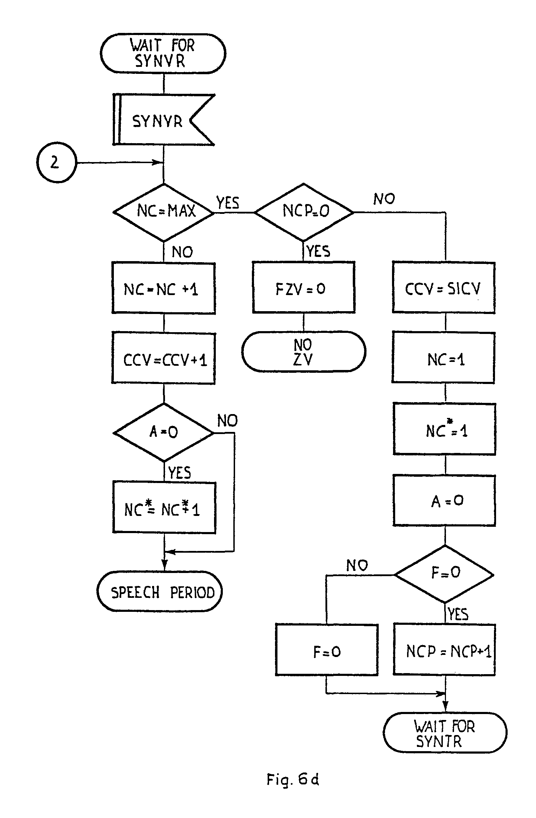

Figures 5, 6 show that logic network CSC is at the beginning in a state S9 (N0 ZV=absence of speech period) and leaves that state at the arrival of a first booking packet (signal PCV) to reach state S10 where it waits for the frame synchronism.

At the arrival of PCV, CSC memorizes the beginning of a speech period (FZV=1), it emits signal RST which starts the time base, it forwards signal PCV to the devices of AU (signal PCV'); it stores the position in MSC of the first busy channel (SICV=1), it maintains the channel adjacent to the busy one available for further bookings (number of channels in the speech zone NCP=2), it stores the information that the busy channel is the first (NC=1, NC*=1, where NC, NC* indicate the channel serial number, counted from the beginning of the speech period or from the first busy channel, respectively) and that no channel in the initial part of the frame has become free (A=0) and it writes in MSC the occupation of the channel corresponding to the address SICV (writing address CCV=SICV, MOCV (SICV)=1.

From the wait for SYNTR state, CSC passes to a state S11 (Fig. 5) corresponding to "existing" speech period (ZV) at the arrival of signal SYNTR, or it remains in S10 due to the arrival of another booking packet.

In the first case the switching between the two units of MSC is effected, presetting the unit written until that instant to the reading and writing into the other element that no channel is booked.

In the latter case, for each new booking packet which has arrived, the counters of the number of the busy channels and of the channels forming the speech period are updated.

In state S11 different situations are possible, namely a speech packet or a booking packet or a release packet or a synchronism signal or yet a signal of beginning of the speech period may arrive.

At the arrival of a speech packet (signal PV) there is a transition to state S12 (wait for channel synchronism) the occupation of the concerned channel is stored (MOCV (CCV)=1) and the counter of the speech-period channels is updated (NCP=NC*). At each signal SYNVR, if NC is different from the number of the last available channel in the speech period (NC≠MAX), CSC resumes state ZV, updating address CCV and increasing NC* by 1 if A=0. If NC=MAX, the initial state S9 is resumed by resetting the speech-period signal, if no more channels are booked (NCP=0); state S10 is resumed if there are busy channels in the present frame (NCP≠0). In the latter case the operation begins again from the first channel of the speech period (CCV=SICV, NC=1, NC*=1) increasing the number of channels in the speech period only if there are no gaps within the period itself. This is indicated by a parameter F which is 0 if there are no gaps.

If a booking packet (PCV) arrives, CSC remains in the speech period state if NC≠MAX; if NC=MAX, CSC goes back to S10 or S9 depending on whether NCP is or not different from zero (i.e. after the check on NC, the operation goes on as for speech packets). Before the check, the booking of a new channel is stored at the address indicated by memory pointers (MOCV (CCV)=1) and the number NCP of channels of the speech period is set to NC. The same transition occurs if a packet or a synchronism signal arrives (which indicates a channel which has become idle in the frame).

Before the check on NC, the number NCP of channels of the speech period is checked: if it is 0, the idle channel is the first, then the frame will be built up beginning from address SICV+1; the release of a channel is signalled (A=1).

If NCP≠0, the serial number of the processed channel is checked to see whether it is equal to the maximum of the preceding frame: in the affirmative, before the check on whether NC=MAX, signal F is set to 1.

Finally, if the "beginning of speech period" signal arrives, state ZV is resumed and the time bases are synchronized again.

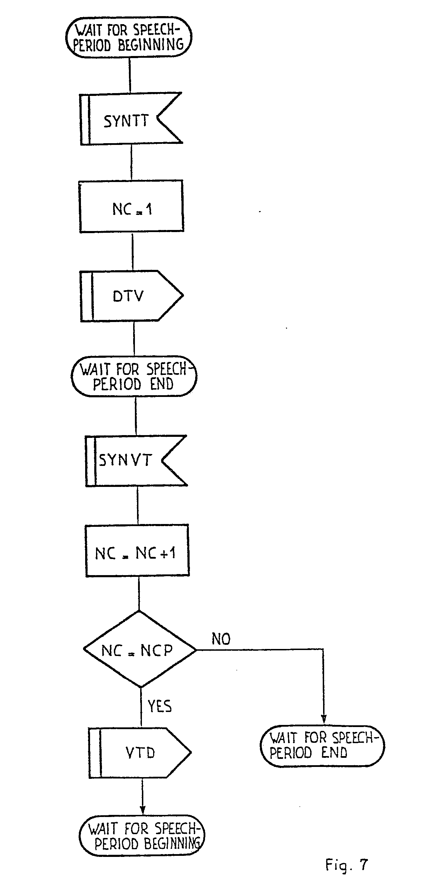

In Fig. 7, logic DVD begins from a state of "wait for the speech period" at the arrival of SYNTT; it sets NC=1, it signals the beginning of the speech period to GP (Fig. 2) and waits for the end of the speech period.

At the arrival of each SYNCV signal, the serial number of the channel is incremented and the new value is compared with number NCP of channels in the speech period.

The state of wait for the end of speech period is resumed, if NCP has not yet been reached, or signal VTD is emitted to indicate the speech period end and the initial state is resumed if value NCP has been reached. This description relates to steady-state operation and presupposes the occurred initialization previously described.

## Claims

1. Distributed variable-band switching system for speech and data packets, comprising a folded unidirectional bus (1) with a signal transmission or writing branch (1S) and a signal reception or reading branch (1L) to which a plurality of terminals (TE1; TEi1,..., TEin; TEm1,..., TEmp) are coupled via transmission couplers (AT) and reception couplers (AR) which are connected to access control devices (AB1,..., ABn) for controlling the access to the bus so that, for speech packet transmission, the activity of the terminals (TE1,..., TEmp) is subdivided into frames the duration of each frame being at least equal to the time elapsing between the generation of two successive packets relating to the same speech communication, the frame comprising time slots each allotted to a speech communication and having a duration equal to that of transmission of a packet and being reserved to the communication during the whole duration thereof, a contention procedure being established in case of simultaneous access requests of some terminals, wherein, for being suitable for an integrated-service public network in which a plurality of nodes (N1,..., Ni,..., Nm) are distributed along the bus (1) and are each associated with a plurality of the terminals (TE1; TEi1,..., TEin; TEm1,..., TEmp), to obtain an ordered arrangement of all the terminals (TE1,..., TEmp), each node (N1,..., Nm) comprises: one of the transmission couplers (AT) and one of the reception couplers (AR), connected to the writing branch (1S) and reading branch (1L) of the bus (1), respectively, and common to all the terminals of the node, a detector (RRS) of the activity of the terminals belonging to upstream nodes, said detector being connected to the writing branch (1S) of the bus (1) upstream the transmission coupler (AT), a detector (CS) of the busy state of the terminals of the node itself or of the activity of upstream nodes, and a collision detector (CD) for sharing the activity among the terminals of the node itself, these two last mentioned detectors being connected to the writing branch (1S) of the bus (1) downstream the transmission coupler (AT); and wherein said detectors (RRS, CS, CD) of activity and busy state or collision are connected to the access control devices (AB1,..., ABn) of all the terminals (TE1,..., TEmp) of the node (N1,..., Nm), each of which devices, depending on the information extracted from the packet flow of the reading branch (1L) of the bus (1) and on the signals emitted by the detectors (RRS, CS, CD), organizes data packet transmission in rounds during which the access to the bus (1) is assured at least once to all the terminals (TE1,..., TEmp) presenting packets ready for transmission, for a time sufficient for the transmission, the transmission priority being allotted to the most upstream node in case of simultaneous requests by terminals belonging to different nodes, whilst the contention procedure is established in case of simultaneous requests by terminals belonging to the same node, and the formation of the first frame in each terminal begins at the instant at which the presence of a booking, i.e. of the first speech communication, is detected at said terminal, while the building-up of subsequent frames begins at the instant at which a signal is detected coming from the terminal to which the first active channel refers.

2. System according to claim 1, characterized in that the terminals (TEi1...TEin) of a node (Ni) are connected to the couplers (AT, AR) through individual lines (2-1...2-n; 3-1...3-n).

3. System according to claim 1, characterized in that the terminals (TEm1...TEmp) of a node (Nm) are connected to a common secondary bus (4) for connection to said couplers.

4. System according to any of claim 1 to 3, characterized in that said device (AB) which controls the access to the bus comprises: devices (RP) recognizing the type of packets present on the bus and recognizing and extracting the packets addressed to the terminal (TE1...TEmp) of which the access control device (AB) is part; devices (MR, MDT, MPT, MVT) for the temporary storage of packets extracted from the bus and of packets to be forwarded on the bus; and control and timing devices (CT) which set up said rounds and said frames, which allot the time slots to the different speech communications and comprise:

— a memory (MSC), which for each frame stores the significant events relating to speech communications and the number of time slots allotted to them, and which is associated with a device (CSC) which controls the writing into the memory on the basis of synchronism signals relating to the reception, supplied by a local time base (BT), and on the basis of signals (PV, PCV, LCV, IZV), delivered by said recognizing devices (RP) and indicating the arrival of packets relating to speech communications and of booking or release packets for channels assigned to such communications, and the beginning of a frame, the information written into the memory during a frame being read in the subsequent frame;

— a circuit (DVD) discriminating a period (speech period) reserved to the transmission of speech channel packets and to their booking and a period reserved for data packet transmission and generates signals (ZD, ZV, VTD, DTV) indicating the periods and the transitions from one period to the other, on the basis of the information relating to the number of channels forming the speech period, which information is supplied by the control device (CSC) of said memory (MSC), and on the basis of synchronism signals relating to transmission delivered by the local time base (BT);
— a logic network (GP) controlling the forwarding on the bus of the packets to be transmitted, within said rounds and said frames, on the basis of the information read in said memory (MSC), of the information received from the activity and collision detectors (RRS, CS, CD), of the information delivered by said discriminating circuit (DVD), of synchronism signals relating to the transmission delivered by the local time base (BT) and of transmission control signals delivered by suitable devices (AU) of the terminal (TE1...TEmp).

5. System according to claim 4, characterized in that said devices (MR) for the temporary storage of the extracted packets comprise a memory (MDR) for data and speech-communication booking and release packets and a speech packet memory (MVR), which is written in a frame and read in the subsequent frame.

6. System according to claim 4, characterized in that said devices for the temporary storage of the packets to be forwarded over the bus comprise a data packet memory (MDT), a memory (MPT) for speech-channel booking packets and a speech-packet memory (MVT), the speech-packet memory (MVT) being written in a frame and read in the subsequent frame.

7. System according to any of claims 4 to 6, characterized in that said control circuit (CSC), at each new booking of a speech channel, controls the writing in the memory so that gaps inside the speech period are occupied first, and only afterwards, when there are no more gaps, said period is actually extended up to a predetermined maximum number of channels.

8. System according to claim 7, characterized in that when extending the speech period, a channel is left free for new bookings at the end of the period itself.

**Patentansprüche**

1. Verteiltes Vermittlungssystem mit variabler Bandbreite für Sprach und Datenpakete, mit einer gefalteten in einer Richtung wirkenden Sammelleitung (1), die einen Signalsende- oder -schreibzweig (1S) und einen Signalempfangs- oder -lesezweig (1L) umfaßt, mit denen eine Mehrzahl von Endstellen (TE1; TEi1,..., TEin; TEm1,..., TEmp) über Sendekoppler (AT) und Empfangskoppler (AR) verbunden sind, die ihrerseits mit Zugriffssteuervorrichtungen (AB1,..., ABn) zum Steuern des Zugriffs zur Sammelleitung so, daß für die Sprachpaketübertragung die Aktivität der Endstellen (TE1,..., TEmp) in Rahmen unterteilt ist, deren jeweilige Dauer wenigstens gleich der zwischen der Erzeugung zweier aufeinanderfolgender Pakete, die sich auf die selbe Sprachverbindung beziehen, verstreichenden Zeit ist, verbunden sind, wobei der Rahmen Zeitlagen umfaßt, die jeweils einer Sprachverbindung zugeordnet sind, eine Dauer gleich der des Sendens eines Pakets hat und für die einzelne Verbindung während deren gesamter Dauer reserviert ist, wobei weiterhin im Fall gleichzeitiger Zugriffsanforderungen einiger Endstellen eine Überbelegungsprozedur festgelegt ist, und wobei zwecks Eignung für ein öffentliches Netz mit integrierten Diensten, bei dem eine Mehrzahl von Knoten (N1,..., Ni,..., Nm) entlang der Sammelleitung (1) verteilt sind und jeweils einer Mehrzahl von Endstellen (TE1; TEi1,..., TEin; TEm1,..., TEmp) zugeordnet sind, zum Erzielen einer geordneten Anordnung sämtlicher Endstellen (TE1,..., TEmp) jeder Knoten (N1,..., Nm) folgende Bauteile umfaßt: einen der Sendekoppler (AT) und einen der Empfangskoppler (AR), die mit dem Schreibzweig (1S) bzw. mit dem Lesezweig (1L) der Sammelleitung (1) verbunden sind und für sämtliche Endstellen des Knotens gemeinsam sind, einen die Aktivität von Endstellen, die nachrichtenstrommäßig oberhalb liegenden Knoten angehören, feststellenden Detektor (RRS), der mit dem Schreibzweig (1S) der Sammelleitung (1) oberhalb des Sendekopplers (AT) verbunden ist, einen den belegten Zustand der Endstellen des Knotens selbst oder die Aktivität von oberhalb gelegenen Knoten feststellenden Detektor (CS) und einen Kollisionsdetektor (CD) zum Teilen der Aktivität unter den Endstellen des eigenen Knotens, wobei diese beiden letztgenannten Detektoren mit dem Schreibzweig (1S) der Sammelleitung (1) unterhalb des Sendekopplers (AT) verbunden sind; und wobei weiterhin die Detektoren (RRS, CS, CD) von Aktivität und belegtem Zustand oder Kollision mit den Zugriffssteuervorrichtungen (AB1,..., ABn) sämtlicher Endstellen (TE1,..., TEmp) des Knotens (N1,..., Nm) verbunden sind und jede dieser Steuervorrichtungen in Abhängigkeit von der vom Paketfluß am Lesezweig (1L) der Sammelleitung (1) extrahierten Information und von den von den Detektoren (RRS, CS, CD) abgegebenen Signalen das Senden von Datenpaketen in Runden organisiert, während derer der Zugriff zur Sammelleitung (1) wenigstens einmal für alle Endstellen (TE1,..., TEmp), die sendefertige Pakete bereithalten, für eine für das Senden ausreichende Zeit sichergestellt ist und die Sendepriorität im Fall gleichzeitiger Anforderungen durch zu verschiedenen Knoten gehörende Endstellen dem im Nachrichtenfluß am weitesten oben liegenden Knoten zugeordnet ist, während die Überbelegungsprozedur im Fall gleichzeitiger Anforderungen von Endstellen, die zum selben Knoten gehören, eingeleitet wird, und die Bildung des ersten Rahmens in jeder Endstelle zu dem Zeitpunkt beginnt, in dem das Vorliegen einer Buchung, also der ersten Sprachverbindung, an dieser Endstelle festgestellt wird, während der Aufbau nachfolgender Rahmen zu dem Zeitpunkt beginnt, zu dem ein von der Endstelle, auf die sich der erste aktive Kanal bezieht, kommenden Signal ermittelt wird.

2. System nach Anspruch 1, dadurch gekennzeichnet, daß die Endstellen (TEi1,..., TEin) eines Knotens (Ni) mit den Kopplern (AC, AR) über individuelle Leitungen (2-1,..., 2-n; 3-1,..., 3-n) verbunden sind.

3. System nach Anspruch 1, dadurch gekennzeichnet, daß die Endstellen (TEm1,..., TEmp) eines Knotens (Nm) mit einer gemeinsamen sekundären Sammelleitung (4) zur Verbindung mit den Kopplern verbunden sind.

4. System nach einem der Ansprüche 1 bis 3, dadurch gekennzeichnet, daß die den Zugriff zur Sammelleitung steuernde Vorrichtung (AB) folgende Baugruppen umfaßt: Vorrichtungen (RP), die die Art der auf der Sammelleitung vorliegenden Pakete erkennen und die zur Endstelle (TE1,..., TEmp), von der die Zugriffssteuervorrichtung (AB) ein Teil ist, adressierten Pakete erkennen und extrahieren; Vorrichtungen (MR, MDT, MPT, MVT) für die vorübergehende Speicherung von von de Sammelleitung extrahierten Paketen und von zur Sammelleitung zu gebenden Paketen; und Steuer- und Zeitgebervorrichtungen (CT), die die Runden und die Rahmen setzen, die Zeitlagen den verschiedenen Sprachverbindungen zuteilen und folgende Einzelschaltungen umfassen:

— einen Speicher (MSC), der für jeden Rahmen die sich auf Sprachverbindungen beziehenden bedeutungsvollen Vorgänge und die Zahl der ihnen zugeordneten Zeitlagen speichert und dem eine Vorrichtung (CSC) zugeordnet ist, die das Schreiben in den Speicher aufgrund von sich auf den Empfang beziehenden Synchronsignalen, die von einem örtlichen Zeitgeber (BT) zugeliefert werden, und aufgrund von Signalen (PV, PCV, LCV, IZV), die von den erkennenden Vorrichtungen (RP) geliefert werden und das Eintreffen von sich auf Sprachverbindungen beziehenden Paketen und von Buchungs- oder Auslösepaketen für Kanäle, die diesen Verbindungen zugeordnet sind, sowie den Anfang eines Rahmens anzeigen, steuert, wobei die während eines Rahmens in den Speicher geschriebene Information im nachfolgenden Rahmen gelesen wird;
— eine Schaltung (DVD), die eine für das Senden von Sprachkanalpaketen und zu ihrer Buchung reservierte Periode (Sprachperiode) und eine für das Senden von Datenpaketen reservierte Periode voneinander unterscheidet und Signale (ZD, ZV, VTD, DTV) erzeugt, die die Perioden und den Übergang von einer Periode zur anderen anzeigen, und zwar aufgrund der Information über die Zahl der die Sprechperiode bildenden Kanäle, wobei diese Information von der Steuervorrichtung (CSC) des Speichers (MSC) geliefert wird, und aufgrund von Synchronsignalen, die sich auf von dem örtlichen Zeitgeber (BT) gelieferte Sendungen beziehen;
— eine logische Schaltung (GP), die das Senden der zu übertragenden Pakete auf die Sammelleitung innerhalb der Runden und der Rahmen aufgrund der im Speicher (MSC) gelesenen Information, der von den Aktivitäts- und Kollisionsdetektoren (RRS, CS, CD) empfangenen Information, der von der unterscheidenden Schaltung (DVD) gelieferten Information, von sich auf die vom örtlichen Zeitgeber (BT) gelieferte Sendung beziehenden Synchronsignalen und von Sendesteuersignalen, die von entsprechenden Vorrichtungen (AU) der Endstelle (TE1,..., TEmp) geliefert werden, steuert.

5. System nach Anspruch 4, dadurch gekennzeichnet, daß die Vorrichtungen (MR) für die vorübergehende Speicherung der extrahierten Pakete einen Speicher (MDR) für Daten- und für Sprachkommunikationsbuchungs- und Auslöse-Pakete und einen Speicher (MVR) für Sprachpakete, in den in einem Rahmen geschrieben und im nachfolgenden Rahmen gelesen wird, umfassen.

6. System nach Anspruch 4, dadurch gekennzeichnet, daß die Vorrichtungen für die vorübergehende Speicherung der über die Sammelleitung zu sendenden Pakete einen Datenpaketspeicher (MDT), einen Speicher (MPT) für Sprachkanalbuchungs-Pakete und einen Speicher (MVT) für Sprachpakete enthält, wobei in den letzteren Speicher in einem Rahmen geschrieben und im nachfolgenden Rahmen gelesen wird.

7. System nach einem der Ansprüche 4 bis 6, dadurch gekennzeichnet, daß die Steuerschaltung (CSC) bei jeder neuen Buchung eines Sprachkanals das Schreiben im Speicher so steuert, daß zuerst Lücken innerhalb der Sprachperiode belegt werden und nur dann, wenn es keine Lücken mehr gibt, diese Periode tatsächlich bis zu einer gegebenen Maximalzahl von Kanälen ausgedehnt wird.

8. System nach Anspruch 7, dadurch gekennzeichnet, daß dann, wenn die Sprachperiode ausgedehnt wird, am Ende der Periode selbst ein Kanal für neue Buchungen freigehalten wird.

**Revendications**

1. Système de commutation distribué à bande variable pour paquets de parole et données, comprenant un bus unidirectionnel replié (1), avec une branche (1S) d'écriture ou transmission des signaux et une branche (1L) de lecture ou réception des signaux, auxquelles une pluralité de terminaux (TE1; TEi1..., TEin; TEm1...TEmp) sont connectés par l'intermédiaire de coupleurs de transmission (AT) et de coupleurs de réception (AR) qui sont connectés à des dispositifs de contrôle de l'accès (AB1...ABn) qui contrôlent l'accès au bus de telle manière que, pour la transmission des paquets de parole, l'activité des terminaux (TE1...TEmp) soit subdivisée en trames, chacune ayant une durée au moins égale au temps qui s'écoule entre la production de deux paquets successifs relatifs à une même communication de parole et comprenant des intervalles de temps dont chacun est assigné à une communication de parole, a durée égale à la durée de transmission d'un paquet et est réservé à la communication pendant toute sa durée, tandis qu'au cas de requêtes simultanées d'accès par plusieurs terminaux on établit une procédure par conflit, système dans lequel, pour s'adapter à un réseau public avec intégration des services où une pluralité de noeuds (N1...Ni...Nm) sont distribués lelong du bus (1) et sont chacun associés à une pluralité des terminaux (TE1, TEi1...TEin, TEm1...TEmp), et pour réaliser une disposition ordonnée de tous les terminaux (TE1...TEmp), chaque noeud (N1...Nm) comprend: un des coupleurs de transmission (AT) et un des coupleurs de réception (AR), connectés respectivement à la branche d'écriture (1S) et de lecture (1L) du bus (1) et communs à tous les terminaux du noeud, un détecteur (RRS) de l'activité des terminaux qui appartiennent aux noeuds placés plus en amont, connecté à la branche d'écriture (1S) du bus (1) en amont du coupleur de transmission (AT), un détecteur (CS) de l'occupation des terminaux du noeud lui-même et de l'activité des noeuds en amont, et un détecteur de collisions (CD) pour répartir l'activité entre les terminaux du noeud, ces deux derniers détecteurs étant également connectés à la branche d'écriture (1S) du bus (1), en aval du coupleur de transmission (AT); et dans lequel lesdits détecteurs (RRS, CS, CD) d'activité et d'occupation ou de collisions sont connectés aux dispositifs (AB1...ABn) de contrôle de l'accès de tous les terminaux (TE1...TEmp) du noeud (N1...Nm), chacun de ces dispositifs, sur la base d'informations extraites des paquets présents sur la branche de lecture (1L) du bus (1) et des signaux émis per lesdits détecteurs (RRS, CS, CD) organise la transmission des paquets de données en reprises pendant lesquelles l'on assure au moins une fois l'accès au bus (1), pour un temps suffisant à la transmission, à tous les terminaux (TE1...TEmp) ayant des paquets prêts à être transmis, la priorité de la transmission étant donnée au noeud le plus en amont, au cas de requêtes simultanées par des terminaux qui appartiennent à des noeuds différents, et en établissant la procédure de conflit au cas de requêtes simultanées par les terminaux qui appartiennent au même noeud; et dans lequel la formation de la première trame dans chaque terminal commence à l'instant où, dans ledit terminal, l'on reconnaît la présence d'une réservation, c'est-à-dire de la première communication de parole, tandis que la formation des trames suivantes commence à l'instant où l'on reconnaît un signal émis par le terminal auquel le premier canal actif se réfère.

2. Système suivant la revendication 1, caractérisé en ce que les terminaux (TE1...TEin) d'un noeud (Ni) sont connectés aux coupleurs (AT, AR) par l'intermédiaire de lignes individuelles (2-1...2-n, 3-1...3-n).

3. Système suivant la revendication 1, caractérisé en ce que les terminaux (TEm1...TEmp) d'un noeud (Nm) sont connectés à un bus secondaire commun (4) pour la liaison auxdits coupleurs.

4. Système suivant l'une quelconque des revendications de 1 à 3, caractérisé en ce que ledit dispositif (AB) qui contrôle l'accès au bus comprend: des dispositifs (RP) pour reconnaître les paquets présents sur le bus et reconnaître et prélever les paquets destinés au terminal (TE1...TEmp) dont le dispositif (AB) de contrôle de l'accès fait partie, des dispositifs (MR, MDT, MPT, MVT) pour le stockage temporaire de paquets prélevés du bus et de paquets à acheminer sur le bus, et des dispositifs (CT) de commande et synchronisation, qui organisent lesdites reprises et trames, assignent les intervalles de temps aux communications de parole et comprennent:

— une mémoire (MSC) qui, à chaque trame, mémorise les événements significatifs relatifs aux communications de parole et le nombre d'intervalles de temps leur assignés, et qui est associée à un organe (CSC) qui commande les opérations d'écriture en mémoire d'après des signaux de synchronisme relatifs à la réception, fournis par une base de temps locale (BT), et d'après des signaux (PV, PCV, LCV, IZV) fournis par lesdits dispositifs de reconnaissance (RP) et indiquant l'arrivée des paquets relatifs aux communications de parole, l'arrivée des paquets de réservation au de libération des canaux assignés à ces communications et le commencement d'une trame, les informations écrites en mémoire dans une trame étant lues dans la trame suivante;

— un circuit (DVD) qui discrimine une zone (zone de parole) réservée à la transmission des paquets relatifs aux canaux de parole et à la réservation de ceux-ci, d'une zone réservée à la transmission des paquets de données et qui engendre des signaux (ZD, ZV, VTD, DTV) qui indiquent la zone et les transitions d'une zone à l'autre, sur la base de l'information relative au nombre des canaux qui constituent la zone de parole (information qui est fournie par l'organe de commande (CSC) de la dite mémoire (MSC)) et sur la base de signaux de synchronisme relatifs à la transmission, fournis par la base de temps locale (BT);

— un réseau logique (GP) qui régle l'acheminement sur le bus des paquets à transmettre, pendant lesdites reprises et trames, sur la base des informations lues dans la dite mémoire (MSC), des informations reçues des détecteurs d'activité et de collisions (RRS, CS, CD), des informations fournies par ledit circuit discriminateur (DVD), de signaux de synchronisme relatifs à la transmission

fournis par la base de temps locale (BT) et de signaux de commande de la transmission fournis par des organes convenables (AU) du terminal (TE1...TEmp).

5. Système suivant la revendication 4, caractérisé en ce que lesdits dispositifs (MR) pour le stockage temporaire des paquets prélevés comprennent une mémoire (MDR) pour les paquets de données et pour les paquets de réservation et libération relatifs aux communications de parole, et une mémoire (MVR) pour les paquets de parole, la mémoire (MVR) pour les paquets de parole étant écrite dans une trame et lue dans la trame suivante.

6. Système suivant la revendication 4, caractérisé en ce que lesdits dispositifs pour le stockage temporaire des paquets à acheminer sur les bus comprennent une mémoire (MDT) pour les paquets de données, une mémoire (MPT) pour les paquets de réservation des canaux de parole et une mémoire (MVT) pour les paquets de parole, la mémoire (MVT) pour les paquets de parole étant écrite dans une trame et lue dans la trame suivante.

7. Système suivant la revendication 4, caractérisé en ce que ledit circuit de commande (CSC), pour chaque nouvelle réservation d'un canal de parole, commande l'écriture en mémoire de manière à réoccuper d'abord des canaux qui se sont rendus disponibles à l'intérieur de la zone de parole et à agrandir effectivement celle-ci, jusqu'à atteindre un nombre maximum préétabli de canaux, seulement lorsqu'il n'y a plus de canaux libres à l'intérieur de la zone de parole.

8. Système suivant la revendication 7, caractérisé en ce que l'accroissement de la zone de parole se fait en laissant un canal disponible pour des nouvelles réservations à la fin de ladite zone.

Fig. 1

Fig 2

0 096 419

Fig.3

Fig. 4

0 096 419

Fig. 5

Fig.6a

Fig.6 b

Fig. 6c

Fig. 6 d

Fig. 7